# EUROPEAN PATENT SPECIFICATION

(11) **EP 2 086 485 B1**
(45) Date of publication and mention of the grant of the patent: **03.04.2013**
(21) Application number: 07864913.4
(22) Date of filing: 29.11.2007
(51) Int. Cl.: A61F 13/15

(54) **MD STRETCH LAMINATE HAVING CD STRETCH**
MD-DEHNUNGSLAMINAT MIT CD-DEHNUNG
STRATIFIÉ POUVANT ÊTRE ÉTIRÉ DANS LE SENS DES FIBRES, MAIS ÉGALEMENT DANS LE SENS TRANSVERSAL AUX FIBRES

(30) Priority: 30.11.2006 US 868021 P
(43) Date of publication of application: 12.08.2009
(60) Divisional application: 12002016.9
(73) Proprietor: Pliant, LLC, Schaumburg, IL 60173 (US)
(72) Inventor: MIDDLESWORTH, Jeffrey Alan, Wauconda, IL 60084 (US); HOENIGMANN, Martin F., Chippewa Falls, WI 54729 (US)
(74) Representative: Schnappauf, Georg
(86) International application number: PCT/US2007/085931
(87) International publication number: WO 2008/067463

(56) References cited:
- EP-A- 0 707 106
- EP-A- 1 637 939
- EP-A2- 1 637 639
- US-A1- 2002 193 510
- US-A1- 2003 060 788
- US-A1- 2003 176 266
- US-A1- 2004 235 406
- US-A1- 2005 215 970
- US-A1- 2006 116 655
- US-B1- 6 270 910

## Description

### BACKGROUND OF THE INVENTION

The presently described technology relates generally to the process of creating an elastic laminate, more specifically a laminate with primarily machine direction stretch, but also having some cross-direction stretch to improve fit.

Disposable absorbent articles (e.g., disposable diapers for children or adults) often include elastic features designed to provide enhanced and sustainable comfort and fit to the wearer by conformably fitting to the wearer over time. Examples of such elastic features may include, for example, elastic waist features, elastic leg cuffs, elastic side tabs, or elastic side panels that can provide expansion and contraction benefits to an absorbent article so that the article may conform to the wearer in varying directions. Additionally, such elastic features are often required to be breathable to provide a desired level of comfort to the wearer's skin.

Further, the elastic features of disposable absorbent articles may be made of compound materials comprising elastic films (including breathable films) or elastic scrims, laminated to non-woven fabrics providing desired surface properties and aesthetics of the compound material. The elastic properties of such compound materials are often obtained by activating the elastic properties within the compound, which can be latent before activation, that is the compound material which is non-elastic by itself before the activation becomes elastic after the activation as if it were itself elastic.

One of the activation techniques can include mechanical stretching, in particular incremental mechanical stretching. Such mechanical stretching provides permanent elongation of the non-woven substrate(s) comprising the compound material to enable the elastic member(s) of the same compound material (e.g., elastic film or elastic scrim) to stretch under a tension force applied thereto. When the elastic member is allowed to contract, the permanently elongated nonwoven fabric wrinkles or shirrs to contract in at least one dimension along with the elastic member. In doing so, the compound material becomes elastic or an elasticized material.

However, the elasticized materials are often expensive because they not only include expensive elastic materials, but also require difficult processing and handling of elastic members (i.e., elastic films and scrims). Such processing can include additional and expensive cutting and slip steps or procedures. Thus, because the elasticized features are relatively expensive to produce and include, they typically contribute to a higher cost of various articles produced (i.e., absorbent articles containing such elasticized members).

Another method of allegedly enhancing fit and comfort to an absorbent article is to use elastic strands in its construction. Published United States Application No. 2003/0089454 to Johnson, describes methods for the manufacture of absorbent articles utilizing such elastic strips. Although the reference describes the articles as providing a comfortable and contoured fit to the wearer over time, the construction of such articles with elastic strips often results in a bulky side area of the product.

Moreover, elastic strand products and other elasticized materials are often expensive to produce because of the inclusion of expensive elastomeric materials such as a styrene block copolymer, but also require difficult process operations.

There is market interest based upon aesthetic and economic reasons in replacing the Lycra® or styrene block copolymer elastic strands used today with an elastic film. By incorporating an elastic film rather than Lycra® or styrene block copolymer elastic strands it is believed that the absorbent product would exhibit a flatter-looking side panel. Further, using a single roll of elastic film could eliminate the processing problems inherent with handling many spools of elastic strands. Further, elastic films may be generally a more cost effective alternative to Lycra® elastic materials.

In the currently known process for producing an MD stretch elastic laminate, an elastic web, preferably an elastic film, is stretched in the machine direction and, while stretched, is attached to at least one unstretched and substantially inextensible nonwoven layer. When the stretching tension is released, the elastic film returns to a length near its original length and draws the attached nonwoven layer back with it. The stretching process for the elastic web is preferably done with sequential stages with rollers having increased speeds to elongate the elastic web. The preferred approach is to have the stretching take place over a short distance in order to limit the amount of narrowing, or necking, of the elastic web. This approach results in a finished laminate that can be easily stretched in the machine direction, but has very little if any stretch in the cross direction.

Thus, there is a need for an elastic laminate fabrication process that can create a flat panel with some stretch in two directions for optimal fit.

### BRIEF SUMMARY OF THE INVENTION

In light of the problems, difficulties and undesired outcomes described above, a process for fabricating an elastic laminate with CD (cross direction) stretch to supplement the MD (machine direction) stretch is disclosed for use in elasticized features of various articles, for example disposable absorbent articles. The laminates made in accordance with the present technology comprise at least one nonwoven fabric layer and at least one elastic film layer laminated to the nonwoven fabric layer. The elastic film layer is stretched to at least about 50% of its initial machine direction length prior to lamination. The elastic film layer is stretched to at least about 20% or greater of its initial cross direction length prior to lamination, in order to impart at least 20% cross-directional stretch with at least 50% recovery to the elastic laminate.

In an embodiment of the present technology, a nonwoven fabric layer is gathered without substantial elongation of the nonwoven web to a degree such that a laminate made from the elastic film layer and the nonwoven fabric layer has at least 20% cross direction stretch and at least 50% recovery of that stretch. In a further embodiment of the present technology, a combination of cross-directional stretching of the elastic film layer and gathering of the nonwoven fabric layer can be utilized to add cross-directional stretch to the elastic laminate.
Specifically, the present invention relates to a laminated elastic composite comprising:
(a) at least one nonwoven fabric layer;
(b) at least one elastic film layer laminated to at least one surface of the nonwoven fabric layer, the elastic film layer having a machine direction and a cross direction, wherein the elastic film layer is stretched to at least about 50% of its initial machine direction length and to at least about 20% of its initial cross direction length prior to lamination; and wherein the laminated elastic composite has a machine direction tensile force at 50% elongation of less than about 10 Newtons/25.4 mm and a cross direction tensile force at 25% elongation of less than about 6 Newtons/25.4 mm.
In one embodiment, the elastic film layer is stretched to at least about 40% of its initial cross direction length prior to lamination. In one embodiment, the nonwoven fabric layer is gathered or corrugated. In one embodiment, the composite further comprises at least one additional nonwoven fabric layer laminated to an opposite surface of the elastic film layer.
The present invention also relates to a process for producing a laminated elastic composite comprising the steps of:
(a) providing at least one nonwoven fabric having a machine direction and a cross direction;
(b) providing at least one elastic film having a machine direction and a cross direction;
(c) stretching the elastic film to at least about 50% of its initial machine direction length and to at least about 20% of its initial cross direction length;
(d) laminating the stretched elastic film to at least one surface of the nonwoven fabric; and wherein the laminated elastic composite has a machine direction tensile force at 50% elongation of less than about 10 Newtons/25.4 mm and a cross direction tensile force at 25% elongation of less than about 6 Newtons/25.4 mm.
In one embodiment, the elastic film is stretched to at least about 40% of its initial cross direction length prior to the laminating step. In one embodiment, the process further comprises the step of gathering or corrugating the nonwoven fabric prior to the laminating step, wherein the nonwoven fabric is preferably corrugated by impressing at least one corrugated roller into the nonwoven fabric. In one embodiment, the process further comprises the step of laminating at least one additional nonwoven fabric to an opposite surface of the elastic film. In one embodiment, the elastic film is stretched in the cross direction by use of a stretching pattern on at least one roller. In one embodiment, the stretching pattern may be a chevron pattern or at least one raised band positioned on a surface of the roller. In one embodiment, the roller is concave shaped. In one embodiment, the elastic film is stretched in the cross direction by use of at least two intermeshing rollers having one or more opposing concave and convex surfaces or one or more undulating surfaces. In one embodiment, the machine direction and cross direction stretching are done simultaneously, concurrently, sequentially, or consecutively.
In one embodiment of the laminated elastic composite or the process for producing a laminated elastic composite of the invention the machine direction tensile force at 50% elongation is less than about 5 Newtons/25.4 mm. In one embodiment of the laminated elastic composite or the process for producing a laminated elastic composite of the invention the cross direction tensile force at 25% elongation is less than about 4 Newtons/25.4 mm.
The present invention also relates to a disposable article comprising:
at least one laminated elastic composite comprising:
   (a) at least one nonwoven fabric layer;
   (b) at least one elastic film layer laminated to at least one surface of the nonwoven fabric layer, the elastic film layer having a machine direction and a cross direction, wherein the elastic film layer is stretched to at least about 50% of its initial machine direction length and to at least about 20% of its initial cross direction length prior to lamination; and wherein the laminated elastic composite has a machine direction tensile force at 50% elongation of less than about 10 Newtons/25.4 mm and a cross direction tensile force at 25% elongation of less than about 6 Newtons/25.4 mm.

### BRIEF DESCRIPTION OF THE DRAWINGS

While the specification concludes with claims particularly pointing out and distinctly claiming the subject matter, which is regarded as the presently described technology of the present invention, it is believed that the presently described technology will be more fully understood from the following description taken in conjunction with the accompanying figures, in which:

Figure 1 is a schematic diagram illustrating a stacking roll arrangement for imparting CD stretch to the elastic film simultaneously with MD stretch.

Figure 2 is a backview of one embodiment of at least one of the rolls in the stacking roll arrangement illustrated in Figure 1.

Figure 3 is a front view of another embodiment of at least one of the stacking rolls of Figure 1.

Figure 4 is a front view of a further embodiment of at least one of the stacking rolls of Figure 1.

Figure 5 is a front view of a still further embodiment of at least one of the stacking rolls of Figure 1.

Figure 6 is an alternative embodiment of adjacent rolls in the stacking roll arrangement illustrated in Figure 1.

Figure 7 is a schematic diagram illustrating a roll arrangement for imparting CD stretch to the elastic film before and/or after MD stretching.

Figure 8 is a front view of a corrugated roll for gathering the nonwoven fabric.

### DETAILED DESCRIPTION OF THE INVENTION

The elastomeric films, elastic laminates, methods of producing such laminates and articles incorporating the elastic laminates of the presently described technology are suited for a variety of uses and applications, in particular for use in or as garments, such as a disposable absorbent article.

As used herein, the term "absorbent article" refers to a device which absorbs and contains body exudates, and more specifically, refers to a device which is placed against the skin of a wearer to absorb and contain the various exudates discharged from the body. Examples of absorbent articles include diapers, pull-on pants, training pants, incontinence briefs, diaper holders, feminine hygiene garments, and the like.

The term "elastic" or "elastic engine" refers herein to any material that upon application of a force to its relaxed, initial length can stretch or elongate to its elongated length without rupture and breakage, and which can substantially recover its initial length upon release of the applied force.

The phrase "substantially equal" herein refers to any numerical value with a variance of (+) or (-) about 20% from the base numerical value. Thus, one of ordinary skill in the art will recognize that the physical property values (or other values) set forth herein, in particular, permanent set, are capable of being within the spirit and scope of the present technology after consideration of test method error.

The term "elasticized" refers herein to any elastic material comprising one or more elastic components and one or more nonwoven fabrics, which may be activated to provide permanent elongation of the non-woven fabrics to enable the elastic components to stretch under application of a tension force. Additionally, the term "elasticized" can also refer herein to nonwovens that are inherently elastic, but do not require activation. However, such nonwovens are expensive to manufacture. Further the term "elasticized" can also refer herein to nonwovens that are inherently extensible, but do not recover. Such nonwovens can also be made to behave in an elastic manner by laminating them to elastic films. Thus, one of ordinary skill in the art will appreciate that the term "elasticized" can refer to any of the various activated, non-activated, laminated, and inherent elastic compounds and situations noted above.

The term "latent elastic material" refers herein to a compound material which by itself can be substantially non-elastic or partially elastic before activating its latent elastic properties.

The term "disposable" is used herein to describe absorbent articles, which generally are not intended to be laundered or otherwise restored or reused as absorbent articles, but rather discarded after use by the wearer.

The term "breathable" refers herein to any material for use in garments or disposable absorbent articles, which is capable of transmitting air vapor to provide desired comfort to the wearer.

The term "machine direction" for a nonwoven fabric, web or laminate refers to the direction in which it was produced. The terms "cross direction" or "transverse direction" refer to the direction perpendicular to the machine direction.

Thermoplastic materials suitable for use in the elastomeric films and laminates of the present technology are generally materials that flow when heated sufficiently above their glass transition temperature and become solid when cooled.

Thermoplastic materials that have elastomeric properties are typically called elastomeric materials. Thermoplastic elastomeric materials are generally defined as materials that exhibit high resilience and low creep as though they were covalently crosslinked at ambient temperatures, yet process like thermoplastic nonelastomers and flow when heated above their softening point. Thermoplastic elastomeric materials, in particular block copolymers, useful in practicing the presently described technology can include, for example, linear, radial, star, and tapered block copolymers such as styrene block copolymers, which may include, for example, Kraton® or Kraton®-based styrene block copolymers available from Kraton Polymers, Inc., located in Houston, TX, styrene-isoprene block copolymers, styrene-(ethylene-butylene) block copolymers, styrene-(ethylene-propylene) block copolymers, and styrene-butadiene block copolymers; polyether esters such as that available under the trade designation HYTREL™ G3548 from E.I. DuPont de Nemours; and polyether block amides such PEBAX™ available from E1f Atochem located in Philadelphia, PA. Preferably, styrene block copolymers are utilized in practicing the presently described technology. Styrene-ethylene butylene block copolymers are most preferred. The styrene block copolymers of the present technology may be used in the described elastomeric film materials in amounts from about 10% to about 50% by weight, based upon the total weight of the film.

Non-styrene block copolymers (elastomers or plastomers) suitable for use in accordance with the presently described technology include, but are not limited to, ethylene copolymers such as ethylene vinyl acetates, ethylene octene, ethylene butene, and ethylene/propylene copolymer or propylene copolymer elastomers, such as those available under the trade designation VISTAMAXX® available from ExxonMobil, located in Irving, Texas, or ethylene/propylene/diene terpolymer elastomers, and metallocene polyolefins such as polyethylene, poly (1-hexene), copolymers of ethylene and 1-hexene, and poly(1-octene); olefin block copolymers of ethylene/octene based elastomers and plastomers available from Dow Chemical Co., Midland, Michigan, under the trade name INFUSE™; thermoplastic elastomeric polyurethanes such as that available under the trade designation MORTHANE™ PE44-203 polyurethane from Morton International, Inc., located in Chicago, IL and the trade designation ESTANE™ 58237 polyurethane from Noveon Corporation, Inc., located in Cleveland, OH; polyvinyl ethers; poly-α-olefin-based thermoplastic elastomeric materials such as those represented by the formula -(CH2CHR)x where R is an alkyl group containing about 2 to about 10 carbon atoms; poly-α-olefins based on metallocene catalysis such as ENGAGE™ 8200, ethylene/poly-α-olefin copolymer available from Dow Plastics Co., located in Midland, Michigan; polybutadienes; polybutylenes; polyisobutylenes such as VISTANEX NM L-80, available from Exxon Chemical Co.; and polyether block amides such PEBAX™ available from E1f Atochem located in Philadelphia, PA. A preferred elastomer or plastomer of the presently described technology is an ethylene/propylene copolymer or polypropylene copolymer. It is also preferable that the non-styrene block copolymer elastomer or plastomer of the presently described technology comprise from about 10% to about 95% by weight of the elastomeric film composition based upon the total weight of the composition. For example, one embodiment of the elastomer or plastomer of the presently described technology may be comprised of a polypropylene copolymer containing from about 50% to about 95% of propylene content.

Additional elastomers which can be utilized in accordance with presently described technology also include, for example, natural rubbers such as CV-60, a controlled viscosity grade of rubber, and SMR-5, a ribbed smoked sheet rubber; butyl rubbers, such as EXXON™ Butyl 268 available from Exxon Chemical Co., located in Houston, TX; synthetic polyisoprenes such as CARIFLEX™, available from Shell Oil Co., located in Houston, TX, and NATSYN™ 2210, available from Goodyear Tire and Rubber Co., located in Akron, OH; and styrene-butadiene random copolymer rubbers such as AMERIPOL SYNPOL™ 1101 A, available from American Synpol Co., located in Port Neches, TX.

Additional thermoplastic materials which may also be useful in practicing the presently described technology that are generally considered nonelastomeric include, for example, polyolefins such as isotactic polypropylene, low density polyethylene, linear low density polyethylene, medium density polyethylene, high density polyethylene, polybutylene, nonelastomeric polyolefin copolymers or terpolymers and blends thereof, ethylene-vinyl acetate copolymers such as those available under the trade designation ELVAX™ from E. I. DuPont de Nemours, Inc., located in Wilmington, DE; ethylene acrylic acid copolymers; ethylene methacrylic acid copolymers such as those available under the trade designation SURLYN™ 1702 from E.I. DuPont de Nemours, Inc.; polymethylmethacrylate; polystyrene; ethylene vinyl alcohol; polyesters including amorphous polyester; polyamides; fluorinated thermoplastics such as polyvinylidene fluoride; halogenated thermoplastics such as chlorinated polyethylene; polyether-block-amides such as those available under the trade designation PEBAX™ 5533 from E1f-Atochem North America, Inc., located in Philadelphia, PA. It will be appreciated by those skilled in the art that these additional thermoplastic materials may be utilized in accordance with the spirit and scope of the presently described technology to achieve further desired physical properties of the resultant elastomeric compositions or films.

It will also be appreciated by those skilled in the art that additives may be added to the one or more layers of the presently described film technology in order to improve certain characteristics of the particular layer. Preferred additives include, but are not limited to, color concentrates, neutralizers, process aids, lubricants, stabilizers, hydrocarbon resins, antistatics, and antiblocking agents. It will also be appreciated that a color concentrate may be added to yield a colored layer, an opaque layer, or a translucent layer. A suitable nucleating agent may include, for example, calcium carbonate while a suitable processing aid may include, for example, calcium stearate.

Suitable antistatic agents may include, for example, substantially straight-chain and saturated aliphatic, tertiary amines containing an aliphatic radical having from about 10 to about 20 carbon atoms that are substituted by ω-hydroxy-(C₁-C₄)-alkyl groups, and N,N-bis-(2-hydroxyethyl)alkylamines having from about 10 to about 20 carbon atoms in the alkyl group. Other suitable antistatics can include ethoxylated or propoxylated polydiorganosiloxanes such as polydialkylsiloxanes and polyalkylphenylsiloxanes, and alkali metal alkanesulfonates.

Antiblocking agents suitable for use with the presently described film technology include, but are not limited to, calcium carbonate, aluminum silicate, magnesium silicate, calcium phosphate, silicon dioxide, and diatomaceous earth. Such agents can also include polyamides, polycarbonates, and polyesters.

Additional processing aids that may be used in accordance with the presently described technology include, for example, higher aliphatic acid esters, higher aliphatic acid amides, metal soaps, polydimethylsiloxanes, and waxes. Conventional processing aids for polymers of ethylene, propylene, and other α-olefins are preferably employed in the present technology. In particular, alkali metal carbonates, alkaline earth metal carbonates, phenolic stabilizers, alkali metal stearates, and alkaline earth metal stearates are preferentially used as processing aids for the films of the presently described technology.

The elastomeric materials can be made into the elastic films of the presently described technology using a variety of known film processing techniques. Such techniques include lamination, 'coextrusion, blown film extrusion, and cast film processes to make single layer or multilayer films for use in the presently described elastic laminates.

The nonwoven fabric for use in the laminate of the present technology can be any nonwoven fabric that is gatherable, although nonwoven fabrics that are also nonextensible in the machine direction are preferred for economic reasons. By "nonextensible" is meant that the material cannot be stretched by at least 50% of its relaxed initial length without either breaking or exceeding 1 Newtons/25.4 mm force. Such nonextensible nonwoven fabrics include, but are not limited to spunbonded nonwovens such as polypropylene or polyethylene or bicomponent nonwoven fabrics, and multilayer spunbond meltblown spunbond (SMS) nonwoven fabrics. Nonwoven fabrics that are nonextensible in the machine direction but have some extensibility in the cross direction are also suitable for use in the present laminates. Such nonwoven fabrics include, but are not limited to, carded nonwovens such as carded polypropylene nonwoven fabrics or air laid nonwovens.

Nonwoven fabrics that are extensible may also be used in the laminates of the present technology, although such nonwoven fabrics are typically more expensive than those that are nonextensible. Extensible nonwoven fabrics include, but are not limited to, those formed by spunlace processes, meltblowing processes, spunbonding processes, air laying processes, and bonded carded web processes.

The CD stretch properties of the presently described laminates are incorporated into the laminates by (1) adding CD stretch to the elastic film layer prior to attachment to the nonwoven fabric layer, or (2) gathering the nonwoven fabric layer before attachment to the elastic film layer, or (3) a combination of stretching the film layer and gathering the nonwoven fabric layer prior to attachment of the layers.

Adding CD stretch to the elastic film prior to lamination with the nonwoven fabric layer has the advantage of reducing the cost of the final laminate since stretching thins out the elastic film which is typically the most expensive component.

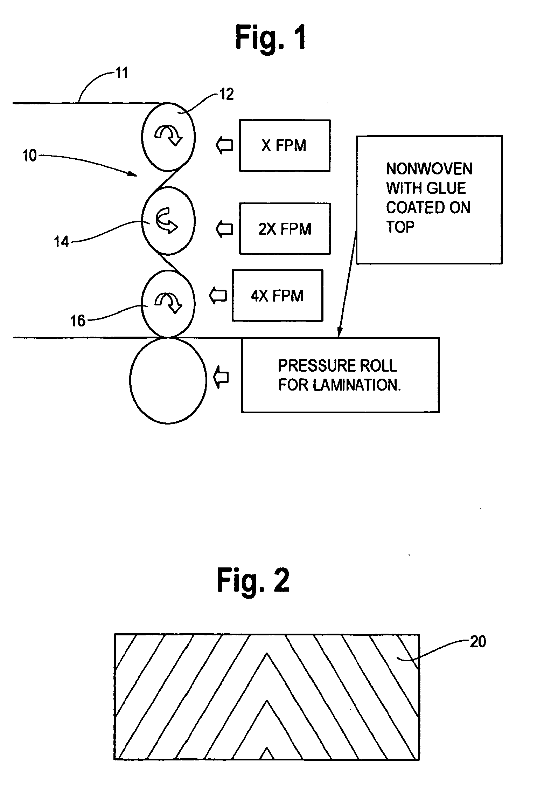

There are a variety of techniques that can be used to add CD stretch to the elastic film layer. In one embodiment, the cross direction stretch is applied in the same apparatus that is used to apply the machine direction elongation to the elastic film layer. As illustrated in Figure 1, a stacked roller arrangement 10 is utilized to elongate the elastic film 11 in the machine direction. Although three stacked rolls are illustrated in Figure 1, more or fewer rolls can be employed. Elongation of the elastic film 11 in the machine direction is accomplished by running each successive roll at a faster speed than the immediately preceding roll. For example, the upper roll 12 in the stack is operated at a speed of x feet per minute (fpm), while the second roll 14 is operated at a speed of 2x fpm (2 times x fpm), and the third roll 16 is operated at a speed of 4x fpm (4 times x fpm). Preferably, the gap between rolls 12 and 14 and between rolls 14 and 16 is about 1 inch or less in order to minimize inherent necking of the elastic film.

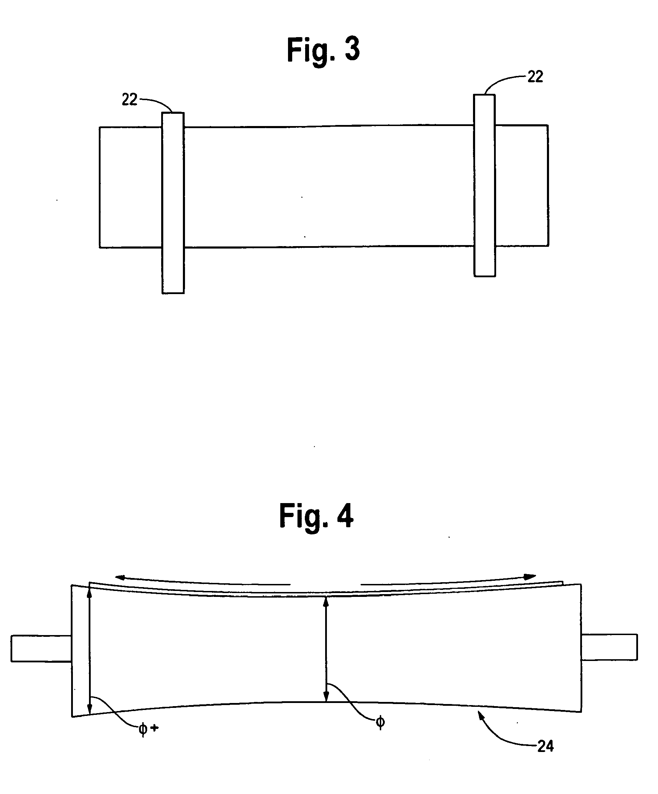

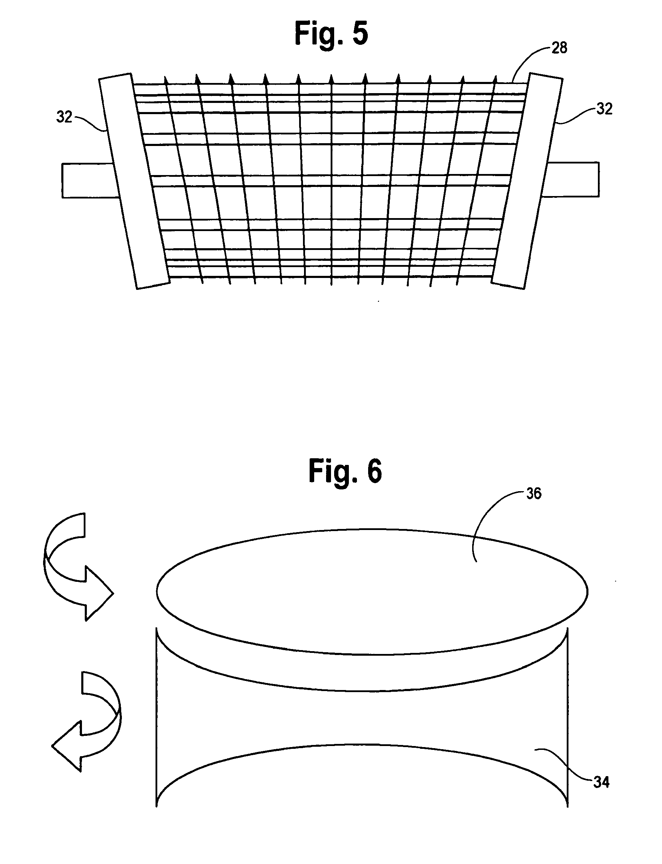

Cross-directional stretch of the elastic film can be accomplished simultaneously with the machine direction stretching using a variety of techniques. One technique is to utilize a spreading pattern on at least one of the stretching station rolls. For example, as shown in Figure 2, one of the stretching station rolls can be provided with a repeating chevron pattern 20 in a raised section on the roller. This creates a greater path length across the width of the elastic web such that with the force of web tension, or with the force of a contacting nipping roller, the elastic web is stretched in the cross direction. Another alternative stretching structure for the stretching station roll is illustrated in Figure 3. In this embodiment, the roll has at least one raised band or ring 22 that circumferentially circles the surface of the roll. The raised section of the roll can be parallel rings, as shown in Figure 3, or alternatively a spiral flight like a barber's pole. To enhance gripping of the film by the raised portion, the raised portion can be formed from a high grip material such as rubber. Other alternative structures for the stretching station roll include a concave-shaped roll 24, (see Figure 4) or an expander roll 26, (see Figure 5) which employs a series of bands 28 and/or slats and adjustable angle cams 32.

In another alternative, two of the stretching station rolls can be replaced with a matched pair of concave and convex rolls, such as concave roll 34 and convex roll 36, illustrated in Figure 6. Because the MD strain is high and the web is elastic, the varying speed of the concave and convex rolls can be handled by the web without causing web distortion in this arrangement.

In a still further alternative, the matched pair of rolls can have a different shape than the simple concave and convex rolls illustrated in Figure 6. For example, the upper roll can have an undulating pattern, with the lower roll having a reverse matching undulating pattern. The longer CD web path created by the undulations leads to increased CD stretching of the web.

Interestingly, in the machine direction stretching process the elastic web tends to neck. It is possible to apply a cross direction stretching force by merely inhibiting the film's natural tendency to neck through the use of any of the spreading patterns described above. For example, if the elastic film has a tendency to neck to .84 of its starting width and the film is instead held to its starting width, the film will be 20% wider or 20% CD stretched.

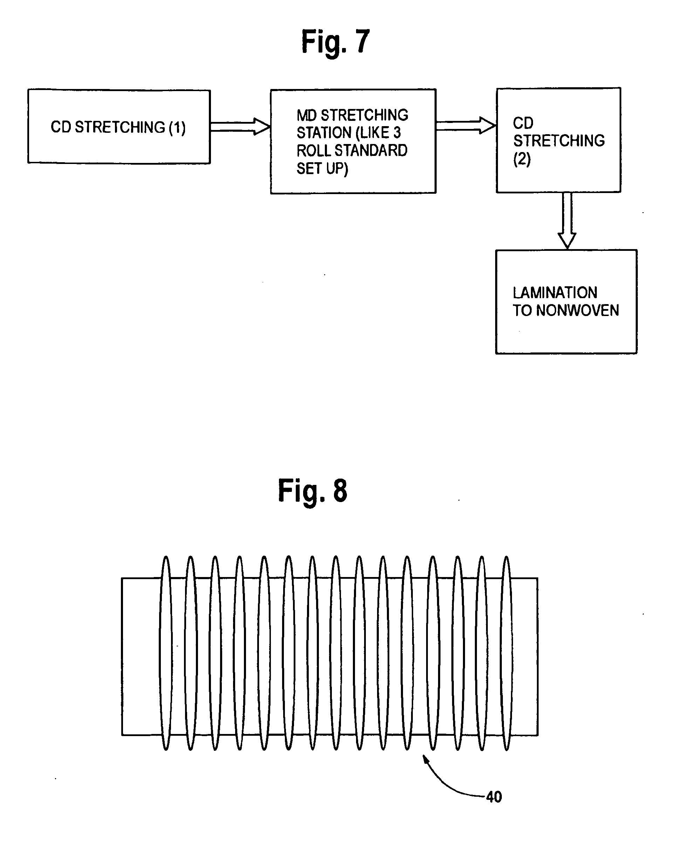

In an alternative embodiment, illustrated in Figure 7, the cross directional stretching is accomplished through a separate spreading step occurring either before or after the machine direction stretching step. Such a cross direction stretching step can be accomplished using any of the web spreading techniques described above, as well as other spreading techniques known in the art. Such web spreading techniques include, for example, bowed rolls, concave rolls, bent pipes, dual spreaders, expander rolls, edge roll spreaders, a tenter arrangement or the gripping belts of a canted wheel stretching device.

Stretching of the elastic film in the machine direction is accomplished at a stretching level of at least 50% (stretching ratio of 1.5:1), alternatively at least 100% (stretching ratio of 2:1). Stretching of the elastic film in the cross direction is accomplished at a stretching level of at least 20% (stretching ratio of 1.2:1), alternatively at least 40% (stretching ratio of 1.4:1).

Rather than building CD stretch into the elastic film layer, the cross direction stretching potential of the MD stretch elastic laminate can be developed by gathering the nonwoven in the cross direction before lamination to the stretched elastic web. A preferred approach to accomplish this gathering is the use of a corrugated pattern impressed upon the nonwoven fabric layer. The corrugated pattern can be present in a roller, such as the roller 40 shown in Figure 8, which contacts the nonwoven fabric immediately before lamination. The corrugations are preferably located on the ends of the roller, or, alternatively can be located in the middle of the roller. The corrugations add width to the relatively inextensible nonwoven and, when laminated, the elastic web can freely stretch until the nonwoven becomes taut. The elastic web attached to the nonwoven recovers upon stretching of the laminate and creates a laminate with at least 20% MD stretch and 50% recovery from that stretch. If desired, gathering of the nonwoven fabric can be utilized in combination with the cross direction stretching of the elastic film layer in order to create a greater CD elongation in the laminate.

Regardless of whether the CD stretch is added to the laminate by stretching the elastic film layer in the cross direction prior to lamination, by gathering the nonwoven fabric layer prior to lamination, or a combination of both methods, the resulting laminate has excellent MD elongation and MD tensile strength, as well as good CD elongation and CD tensile strength. In particular, the stretch laminate has a machine direction tensile force at 50% elongation of less than about 10 Newtons/25.4 mm, alternatively less than about 5 Newtons/25.4 mm, and recovery to less than about 25% elongation. The stretch laminate has a cross direction tensile force at 25% elongation of less than about 6 Newtons/25.4 mm, alternatively less than about 4 Newtons/25.4 mm, and recovery to less than about 12.5% elongation. The stretch laminate also has a machine direction tensile force of greater than about 20 Newtons/25.4 mm, alternatively greater than about 30 Newtons/25.4 mm, and a cross direction tensile force of greater than about 15 Newtons/25.4 mm, alternatively greater than about 20 Newtons/25.4 mm.

If the elastic stretching and lamination process is made a process step within the fabrication of a garment it is possible to vary the level of MD and CD stretch in register with the garment production in order to optimize the fit of the elasticized material upon the wearer. For example, a better fit can be accomplished if the maximum CD stretch occurs on the final product in a section corresponding to the wearer's buttocks while minimal CD stretch might be desired in the section corresponding to the side seam on the garment.

All documents, e.g., patents and journal articles, cited above and/or below, are hereby incorporated by reference in their entirety. One skilled in the art will recognize that modifications may be made in the presently described technology without deviating from the spirit or scope of the invention. The presently described technology is also illustrated by the following examples which are not to be construed as limiting the invention or scope of the specific procedures or compositions described herein. All levels and ranges, temperatures, results, etc., used and/or described herein are approximations unless otherwise specified.

The invention is further illustrated in the following non-limiting Examples.

### Examples

### Example 1

A MD stretch laminate is made by stretching an elastic film at a ratio of 4:1 in the machine direction using a three roll stretching stack like that illustrated in Figure 1. The film of this example was a five layer coextrusion with CABAC layering. The C layers amounted to 10% of the total by weight and were composed of 90% ExxonMobil HD6719.17 high density polyethylene and 10% Ampacet 10820 antislip masterbatch. The A layers amounted to 40% of the total by weight and were composed of 96% ExxonMobil Vistamaxx 1120 ethylene propylene elastomer and 4% of Ampacet 111017P TiO2 masterbatch. The B layer amounted to 50% of the total by weight and was composed 100% of Vistamaxx 1120 ethylene propylene elastomer. An SMS nonwoven fabric having a basis weight of 13.5 gsm is laminated to each side of the stretched film using 4 gsm of DM Cool Elastic Adhesive, product no. 34-309 available from National Starch and Chemical Company, Bridgewater, New Jersey, at 250°F without cooling. Properties of the laminate are set out in Table 1.

### Example 2

A MD stretch laminate is made in accordance with the procedure described in Example 1, except that a spunbond polypropylene nonwoven fabric having a basis weight of 15.3 gsm is used in place of the SMS nonwoven fabric. Properties of the laminate are set out in Table 1.

### Example 3

A MD stretch laminate is made in accordance with the procedure described in Example 1, except that a carded polypropylene nonwoven fabric having a basis weight of 18 gsm is used in place of the SMS nonwoven fabric. Properties of the laminate are set out in Table 1.

**TABLE 1**

| Properties | Example 1 | Example 2 | Example 3 |
|---|---|---|---|
| Basis Weight, gsm | 125 | 122 | 142 |
| MD @ 25%, N/25.4 mm | 1.23 | 1.18 | 1.25 |
| MD @ 50%, N/25.4 mm | 2.30 | 2.25 | 2.25 |
| MD Peak Tensile, N/25.4 mm | 58.8 | 55.8 | 46.8 |
| MD Peak Elong., % | 254 | 260 | 218 |
| CD @ 25%, N/25.4 mm | 12.6 | 11.6 | 3.0 |
| CD @ 50%, N/25.4 mm | 32.2 | 25.8 | 5.5 |
| CD Peak Tensile, N/25.4 mm | 49.9 | 35.4 | 14.9 |
| CD Peak Elong., % | 98 | 84 | 161 |
| Slow Puncture (1/4") grams | 3212 | 3325 | 2220 |
| 80% Cyclic Test | | | |
| Permanent Set (1^{st} cycle) | 4.8 | 7.4 | 5.0 |
| Permanent Set (2^{nd} cycle) | 6.0 | 8.6 | 5.7 |
| Permanent Set (3^{rd} cycle) | 6.35 | 9.65 | 6.85 |

From the results shown in Table 1, it can be seen that the Example 1 and 2 laminates have excellent tensile strength in both the machine and cross directions, but that the CD tensile forces at 25% and 50% are higher than desired. The Example 3 laminate, on the other hand has low forces to 25% or 50% elongation, but lacks suitable tensile strength.

In order to achieve laminates having tensile strength that is approximately equivalent to that of the Examples 1 and 2 laminates, as well as lower tensile forces at 25% CD elongation, the elastic films used in Examples 1 and 2 are subjected to a CD stretching operation prior to lamination to the Example 1 and 2 nonwoven fabrics. The laminates have lower tensile forces at 25% CD elongation compared to the Example 1 and 2 laminates, demonstrating improved CD elongation, while also demonstrating good MD and CD tensile strength.

In an alternative embodiment, the nonwoven fabrics used in Examples 1 and 2 are corrugated using a corrugation roller similar to that illustrated in Figure 8 prior to lamination to the elastic film used in Examples 1 and 2. The corrugated nonwoven fabrics are then laminated to the elastic film in accordance with the Example 1 procedure. The laminates have lower tensile forces at 25% elongation compared to the Examples 1 and 2 laminates and also have good MD and CD tensile strength.

The presently described technology and the manner and process of making and using it, are now described in such full, clear, concise and exact terms as to enable one of ordinary skill in the art to which the present technology pertains, to make and use the same. It should be understood that the foregoing describes some embodiments and advantages of the invention and that modifications may be made therein without departing from the spirit and scope of the presently described technology as set forth in the claims. Moreover, the invention has been described with reference to preferred and alternate embodiments. Modifications and alterations will occur to others upon the reading and understanding of the specification. It is intended to include all such modifications and alterations insofar as they come within the scope of the appended claims or equivalents thereof. To particularly point out and distinctly claims the subject matter regarded as the invention, the following claims conclude this specification.

## Claims

1. A laminated elastic composite comprising:
(a) at least one nonwoven fabric layer;
(b) at least one elastic film layer laminated to at least one surface of the nonwoven fabric layer, the elastic film layer having a machine direction and a cross direction, wherein the elastic film layer is stretched to at least about 50% of its initial machine direction length and to at least about 20% of its initial cross direction length prior to lamination; and
wherein the laminated elastic composite has a machine direction tensile force at 50% elongation of less than about 10 Newtons/25.4 mm and a cross direction tensile force at 25% elongation of less than about 6 Newtons/25.4 mm.

2. The laminated elastic composite of claim 1, wherein the elastic film layer is stretched to at least about 40% of its initial cross direction length prior to lamination.

3. The laminated elastic composite of claim 1 or 2, wherein the nonwoven fabric layer is gathered, or corrugated.

4. The laminated elastic composite of claim 1, wherein the composite further comprises at least one additional nonwoven fabric layer laminated to an opposite surface of the elastic film layer.

5. A process for producing a laminated elastic composite comprising the steps of:
(a) providing at least one nonwoven fabric having a machine direction and a cross direction;
(b) providing at least one elastic film having a machine direction and a cross direction;
(c) stretching the elastic film to at least about 50% of its initial machine direction length and to at least about 20% of its initial cross direction length;
(d) laminating the stretched elastic film to at least one surface of the nonwoven fabric; and
wherein the laminated elastic composite has a machine direction tensile force at 50% elongation of less than about 10 Newtons/25.4 mm and a cross direction tensile force at 25% elongation of less than about 6 Newtons/25.4 mm.

6. The process for producing a laminated elastic composite of claim 5, wherein the elastic film is stretched to at least about 40% of its initial cross direction length prior to the laminating step.

7. The process for producing a laminated elastic composite of claim 5 or 6, wherein the process further comprises the step of gathering or corrugating the nonwoven fabric prior to the laminating step, wherein the nonwoven fabric is preferably corrugated by impressing at least one corrugated roller into the nonwoven fabric.

8. The process for producing a laminated elastic composite of claim 5, wherein the process further comprises the step of laminating at least one additional nonwoven fabric to an opposite surface of the elastic film.

9. The process for producing a laminated elastic composite of claim 5 or 6, wherein the elastic film is stretched in the cross direction by use of a stretching pattern on at least one roller.

10. The process for producing a laminated elastic composite in accordance with claim 9, wherein the stretching pattern is a chevron pattern, or at least one raised band positioned on a surface of the roller.

11. The process for producing a laminated elastic composite in accordance with claim 9, wherein the roller is concave shaped.

12. The process for producing a laminated elastic composite of claim 5 or 6, wherein the elastic film is stretched in the cross direction by use of at least two intermeshing rollers having one or more opposing concave and convex surfaces, or one or more undulating surfaces.

13. The process for producing a laminated elastic composite of claim 5 or 6, wherein the machine direction and cross direction stretching are done simultaneously, sequentially, or consecutively.

14. The laminated elastic composite of claim 1 or the process for producing a laminated elastic composite of claim 5, wherein the machine direction tensile force at 50% elongation is less than about 5 Newtons/25.4 mm.

15. The laminated elastic composite of claim 1 or the process for producing a laminated elastic composite of claim 5, wherein the cross direction tensile force at 25% elongation is less than about 4 Newtons/25.4 mm.

16. A disposable article comprising:
at least one laminated elastic composite comprising:
(a) at least one nonwoven fabric layer;
(b) at least one elastic film layer laminated to at least one surface of the nonwoven fabric layer, the elastic film layer having a machine direction and a cross direction, wherein the elastic film layer is stretched to at least about 50% of its initial machine direction length and to at least about 20% of its initial cross direction length prior to lamination; and
wherein the laminated elastic composite has a machine direction tensile force at 50% elongation of less than about 10 Newtons/25.4 mm and a cross direction tensile force at 25% elongation of less than about 6 Newtons/25.4 mm.

## Patentansprüche

1. Laminierter elastischer Verbundstoff, der umfasst:
(a) mindestens eine Vliesschicht,
(b) mindestens eine elastische Filmschicht, die an mindestens eine Oberfläche der Vliesschicht laminiert ist, wobei die elastische Filmschicht eine Maschinenrichtung und eine Querrichtung aufweist, wobei die elastische Filmschicht auf mindestens etwa 50% ihrer anfänglichen Länge in Maschinenrichtung und auf mindestens etwas 20% ihrer anfänglichen Länge in Querrichtung vor der Laminierung gedehnt wird, und
wobei der laminierte elastische Verbundstoff eine Zugkraft in Maschinenrichtung bei 50% Verlängerung von weniger als etwa 10 Newton/25,4 mm und eine Zugkraft in Querrichtung bei 25% Verlängerung von weniger als etwa 6 Newton/25,4 mm aufweist.

2. Laminierter elastischer Verbundstoff nach Anspruch 1, wobei die elastische Filmschicht auf mindestens etwa 40% ihrer anfänglichen Länge in Querrichtung vor der Laminierung gedehnt wird.

3. Laminierter elastischer Verbundstoff nach Anspruch 1 oder 2, wobei die Vliesschicht gerafft oder geriffelt ist.

4. Laminierter elastischer Verbundstoff nach Anspruch 1, wobei der Verbundstoff ferner mindestens eine weitere Vliesschicht umfasst, die an eine gegenüberliegende Oberfläche der elastischen Filmschicht laminiert ist.

5. Verfahren zur Herstellung eines laminierten elastischen Verbundstoffs, dass die Schritte umfasst:
(a) Bereitstellen von mindestens einem Vlies mit einer Maschinenrichtung und einer Querrichtung,
(b) Bereitstellen von mindestens einem elastischen Film mit einer Maschinenrichtung und einer Querrichtung,
(c) Dehnen des elastischen Films auf mindestens etwa 50% seiner anfänglichen Länge in Maschinenrichtung und auf mindestens etwa 20% seiner anfänglichen Länge in Querrichtung,
(d) Laminieren des gedehnten elastischen Films auf mindestens eine Oberfläche des Vlieses und
wobei der laminierte elastische Verbundstoff eine Zugkraft in Maschinenrichtung bei 50% Verlängerung von weniger als etwa 10 Newton/25,4 mm und eine Zugkraft in Querrichtung bei 25% Verlängerung von weniger als etwa 6 Newton/25,4 mm aufweist.

6. Verfahren zur Herstellung eines laminierten elastischen Verbundstoffs nach Anspruch 5, wobei der elastische Film auf mindestens etwa 40% seiner anfänglichen Länge in Querrichtung vor dem Laminierungsschritt gedehnt wird.

7. Verfahren zur Herstellung eines laminierten elastischen Verbundstoffs nach Anspruch 5 oder 6, wobei das Verfahren ferner den Schritt eines Raffens oder Riffelns des Vlieses vor dem Laminierungsschritt umfasst, wobei das Vlies vorzugsweise dadurch geriffelt wird, dass mindestens eine geriffelte Rolle in das Vlies gedrückt wird.

8. Verfahren zur Herstellung eines laminierten elastischen Verbundstoffs nach Anspruch 5, wobei das Verfahren ferner den Schritt eines Laminierens von mindestens einem weiteren Vlies an eine gegenüberliegende Oberfläche des elastischen Films umfasst.

9. Verfahren zur Herstellung eines laminierten elastischen Verbundstoffs nach Anspruch 5 oder 6, wobei der elastische Film in Querrichtung durch Verwendung eines Dehnmusters auf mindestens einer Rolle gedehnt wird.

10. Verfahren zur Herstellung eines laminierten elastischen Verbundstoffs gemäß Anspruch 9, wobei das Dehnmuster ein Fischgrätenmuster oder mindestens ein erhabenes Band, das auf einer Oberfläche der Rolle positioniert ist, ist.

11. Verfahren zur Herstellung eines laminierten elastischen Verbundstoffs gemäß Anspruch 9, wobei die Rolle eine gewölbte Form aufweist.

12. Verfahren zur Herstellung eines laminierten elastischen Verbundstoffs nach Anspruch 5 oder 6, wobei der elastische Film in Querrichtung durch Verwendung von mindestens zwei vermaschten Rollen mit einer oder mehreren gegenüberliegenden konkaven und konvexen Oberflächen oder einer oder mehreren wellenförmigen Oberflächen gedehnt wird.

13. Verfahren zu Herstellung eines laminierten elastischen Verbundstoffs nach Anspruch 5 oder 6, wobei das Dehnen in Maschinenrichtung und Querrichtung simultan, gleichzeitig, sequenziell oder aufeinanderfolgend erfolgt.

14. Laminierter elastischer Verbundstoff nach Anspruch 1 oder Verfahren zur Herstellung eines laminierten elastischen Verbundstoffs nach Anspruch 5, wobei die Zugkraft in Maschinenrichtung bei 50% Verlängerung weniger als etwa 5 Newton/25,4 mm beträgt.

15. Laminierter elastischer Verbundstoff nach Anspruch 1 oder Verfahren zur Herstellung eines laminierten elastischen Verbundstoffs nach Anspruch 5, wobei die Zugkraft in Querrichtung bei 25% Verlängerung weniger als etwa 4 Newton/25,4 mm beträgt.

16. Wegwerfartikel, der umfasst:
mindestens einen laminierten elastischen Verbundstoff, der umfasst:
(a) mindestens eine Vliesschicht,
(b) mindestens eine elastische Filmschicht, die an mindestens eine Oberfläche der Vliesschicht laminiert ist, wobei die elastische Filmschicht eine Maschinenrichtung und eine Querrichtung aufweist, wobei die elastische Filmschicht auf mindestens etwa 50% ihrer anfänglichen Länge in Maschinenrichtung und auf mindestens etwas 20% ihrer anfänglichen Länge in Querrichtung vor der Laminierung gedehnt wird, und
wobei der laminierte elastische Verbundstoff eine Zugkraft in Maschinenrichtung bei 50% Verlängerung von weniger als etwa 10 Newton/25,4 mm und eine Zugkraft in Querrichtung bei 25% Verlängerung von weniger als etwa 6 Newton/25,4 mm aufweist.

## Revendications

1. Composite élastique stratifié, comprenant:
(a) au moins une couche de tissu en nappe non-tissée;
(b) au moins une couche en pellicule élastique stratifiée avec au moins une surface de la couche de tissu en nappe non-tissée, la couche en pellicule élastique ayant un sens machine et un sens transversal, tandis que la couche en pellicule élastique est étirée d'au moins environ 50% de sa longueur initiale dans le sens machine et d'au moins environ 20% de sa longueur initiale dans le sens transversal avant stratification; et
tandis que le composite élastique stratifié a une force de résistance à la traction dans le sens machine à 50% d'allongement inférieure à environ 10 newtons/ 25,4 mm et une force de résistance à la traction dans le sens transversal à 25% d'allongement inférieure à environ 6 newtons/25,4 mm.

2. Composite élastique stratifié selon la revendication 1, dans lequel la couche en pellicule élastique est étirée jusqu'à au moins environ 40% de sa longueur initiale dans le sens transversal avant stratification.

3. Composite élastique stratifié selon la revendication 1 ou 2, dans lequel la couche de tissu en nappe non-tissée est froncée ou ondulée.

4. Composite élastique stratifié selon la revendication 1, dans lequel le composite comprend en outre au moins une couche de tissu en nappe non-tissée additionnelle stratifiée avec une surface opposée de la couche en pellicule élastique.

5. Procédé pour la production d'un composite élastique stratifié, comprenant les étapes de:
(a) fourniture d'au moins un tissu en nappe non-tissée ayant un sens machine et un sens transversal;
(b) fourniture d'au moins une pellicule élastique ayant un sens machine et un sens transversal;
(c) étirage de la pellicule élastique d'au moins environ 50% de sa longueur initiale dans le sens machine et d'au moins environ 20% de sa longueur initiale dans le sens transversal;
(d) stratification de la pellicule élastique étirée avec au moins une surface du tissu en nappe non-tissée; et
dans lequel le composite élastique stratifié a une force de résistance à la traction dans le sens machine à 50% d'allongement inférieure à environ 10 newtons/25,4 mm et une force de résistance à la traction dans le sens transversal à 25% d'allongement inférieure à environ 6 newtons/25,4 mm.

6. Procédé pour la production d'un composite élastique stratifié selon la revendication 5, dans lequel la pellicule élastique est étirée d'au moins environ 40% de sa longueur initiale dans le sens transversal avant l'étape de stratification.

7. Procédé pour la production d'un composite élastique stratifié selon la revendication 5 ou 6, dans lequel le procédé comprend en outre l'étape de fronçage ou d'ondulation du tissu en nappe non-tissée avant l'étape de stratification, tandis que le tissu en nappe non-tissée est ondulé de préférence par empreinte d'au moins un rouleau ondulé dans le tissu en nappe non-tissée.

8. Procédé pour la production d'un composite élastique stratifié selon la revendication 5, dans lequel le procédé comprend en outre l'étape de stratification d'au moins un tissu en nappe non-tissée additionnel sur une surface opposée de la pellicule élastique.

9. Procédé pour la production d'un composite élastique stratifié selon la revendication 5 ou 6, dans lequel la pellicule élastique est étirée dans le sens transversal par utilisation d'un calibre d'étirage sur au moins un rouleau.

10. Procédé pour la production d'un composite élastique stratifié selon la revendication 9, dans lequel le calibre d'étirage est un calibre en chevron, ou au moins une bande surélevée positionnée sur une surface du rouleau.

11. Procédé pour la production d'un composite élastique stratifié selon la revendication 9, dans lequel le rouleau est de forme concave.

12. Procédé pour la production d'un composite élastique stratifié selon la revendication 5 ou 6, dans lequel la pellicule élastique est étirée dans le sens transversal par utilisation d'au moins deux rouleaux s'engrenant et ayant une ou plusieurs surfaces opposées concaves et convexes, ou une ou plusieurs surfaces ondulantes.

13. Procédé pour la production d'un composite élastique stratifié selon la revendication 5 ou 6, dans lequel l'étirage dans le sens machine et dans le sens transversal sont effectués simultanément, concurremment, séquentiellement, ou consécutivement.

14. Composite élastique stratifié selon la revendication 1 ou procédé pour la production d'un composite élastique stratifié selon la revendication 5, dans lequel la force de traction dans le sens machine à 50% d'allongement est inférieure à environ 5 newtons/25,4 mm.

15. Composite élastique stratifié selon la revendication 1 ou procédé pour la production d'un composite élastique stratifié selon la revendication 5, dans lequel la force de traction dans le sens transversal à 25% d'allongement est inférieure à environ 4 newtons/ 25,4 mm.

16. Article jetable comprenant:
au moins un composite élastique stratifié, comprenant:
(a) au moins une couche de tissu en nappe non-tissée;
(b) au moins une couche en pellicule élastique stratifiée avec au moins une surface de la couche de tissu en nappe non-tissée, ayant un sens machine et un sens transversal, tandis que la couche en pellicule élastique est étirée d'au moins environ 50% de sa longueur initiale dans le sens machine et d'au moins environ 20% de sa longueur initiale dans le sens transversal avant stratification; et
tandis que le composite élastique stratifié a une force de résistance à la traction dans le sens machine à 50% d'allongement inférieure à environ 10 newtons/25,4 mm et une force de résistance à la traction dans le sens transversal à 25% d'allongement inférieure à environ 6 newtons/25,4 mm.
